# EUROPEAN PATENT APPLICATION

(11) **EP 1 826 659 A2**
(43) Date of publication of application: **29.08.2007**
(21) Application number: 06025567.6
(22) Date of filing: 11.12.2006
(51) Int. Cl.: G06F 3/041

(54) **Input device using touch panel**

(30) Priority: 28.02.2006 JP 2006053459
(71) Applicant: NINTENDO CO., LTD., Kyoto 601-8501 (JP)
(72) Inventor: Yamamoto, Tomoki Nintendo Co., Ltd., Kyoto 601-8501 (JP)
(74) Representative: Altenburg, Udo

(57) **Abstract**

There provided is an input device comprising a pressure-sensitive type touch panel; a housing for supporting the touch panel so as to contact the touch panel at a position which is away from a detection area on a surface of the touch panel; and a guide frame which is disposed on the surface of the touch panel so as to be attached to a periphery of an opening portion of the housing and is a member independent from the housing. By employing such an input device, even if the housing is strongly pressed, no erroneous inputting will arise and operability will not be impaired.

## Description

### CROSS REFERENCE TO RELATED APPLICATION

The disclosure of Japanese Patent Application No. 2006-053459, filed February 28, 2006, is incorporated herein by reference.

### BACKGROUND OF THE INVENTION

### Field of the Invention

The present invention relates to an input device and more particularly, to an input device using a pressure-sensitive type touch panel.

### Description of the Background Art

As an input device which is capable of inputting a position on a panel by touching a surface of the panel with a finger, a pen or the like, there is a touch panel. The touch panel may be utilized being combined with a display screen as a touch panel display. The touch panel display allows a user to perform intuitive inputting by touching a button and an icon displayed on a screen.

There are a variety of touch panels, one of which is a pressure-sensitive type touch panel typified by a resistive film type touch panel. The pressure-sensitive type touch panel outputs, when a surface of the panel is pressed by a finger or a pen, a signal in accordance with the pressed position.

Since the pressure-sensitive type touch panel has the above-mentioned feature, when a housing is strongly pressed by a user, this pressing force is transmitted via the housing to the touch panel, which may cause a problem of erroneous inputting.

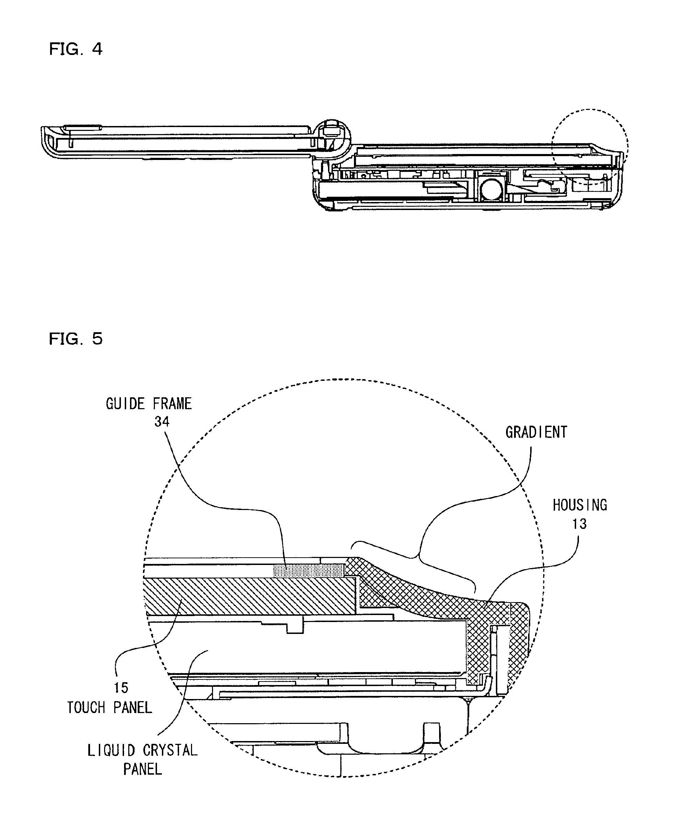

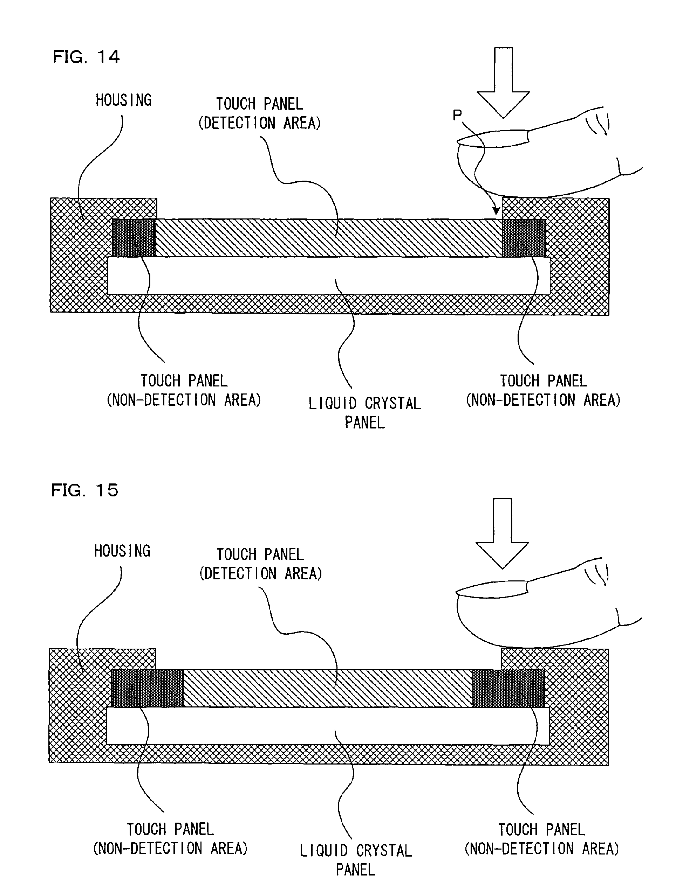

For example, when a housing of a touch panel having a cross-sectional structure shown in FIG. 14 is strongly pressed by a user, the pressing force exerts influence on not only a non-detection area (area in which a position pressed by a finger or a pen is not detected) but also a detection area (area in which a position pressed by a finger or a pen is detected), resulting in erroneous detection in which a point P shown in FIG. 4 would have been pressed.

As one of countermeasures for avoiding the above-mentioned erroneous detection, it is devised that as shown in FIG. 5, a touch panel is structured by separating a position at which the touch panel contacts a housing from a detection area of the touch panel. Such a structure enables, even when the housing is strongly pressed by a user, influence not to be exerted on the detection area of the touch panel, avoiding the erroneous

As a conventional technique for preventing the above-mentioned erroneous inputting which is caused by pressing the housing, there is a technique disclosed in Japanese Laid-Open Patent Publication No. 7-5975 (hereinafter, referred to as patent document 1).

And in order to prevent the above-mentioned erroneous inputting which is caused by pressing the housing, as disclosed in Japanese Laid-Open Patent Publication No. 2001-56748 (hereinafter, referred to as patent document 2), it can be also devised that the housing is floated above the touch panel.

However, when the above-mentioned structure shown in FIG. 15 is employed, a tip of a finger or a pen, while a user is performing sliding operation on the touch panel with the pen or the finger, unintentionally enters a non-detection area, whereby it is likely that inputting by the sliding operation is interrupted. As a result, for example, while an icon or the like is being moved to an intended position, dragging operation is interrupted, resulting in a failure that the icon or the like is moved to an unintended position. And for example, when a predetermined process is performed by touching a peripheral portion of the detection area of the touch panel (for example, when scrolling is performed or a character moves in a predetermined manner by touching the peripheral portion), it is necessary to carefully press the edge portion of the detection area, leading to bad operability (when the structure shown in FIG. 14 is employed, since by touching a periphery of an opening of the housing with a pen, the peripheral portion of a detection area can be stably contacted, such a problem will not arise, leading to favorable operability). Stable touch inputting can be performed, not only in a case where a predetermined process is performed by touching the peripheral portion of the touch panel, but also in some case if inputting is allowed with the pen contacting the periphery of the opening portion of the housing.

Disclosed in the above-mentioned patent document 1 is a technique for an ultrasonic type touch panel. Even if this technique is employed for a pressure-sensitive type touch panel, the above-mentioned erroneous inputting cannot be prevented.

In addition, when the housing is floated above the touch panel as disclosed in patent document 2, a foreign substance such as sand enters a gap between the housing and the touch panel, whereby the foreign substance may cause erroneous inputting or other failure.

### SUMMARY OF THE INVENTION

Therefore, an object of the present invention is to provide an input device using a pressure-sensitive type touch panel, in which even if a housing is strongly pressed, no erroneous inputting will arise and operability will not be impaired.

The present invention has the following features to attain the object mentioned above.

An input device comprises: a pressure-sensitive type touch panel; a housing for supporting the touch panel so as to contact the touch panel at a position which is away from a detection area on a surface of the touch panel; and a guide frame which is disposed on the surface of the touch panel so as to be along an opening portion of the housing and is a member independent from the housing.

The guide frame may cover at least one part of a portion, which is not covered by the housing, of a non-detection area of the touch panel. Thus, it can be prevented that a pen or a finger of a player enters a non-detection area, which the player does not intend, enhancing operability. It is preferable that the guide frame is disposed so that a tip of the pen cannot contact the non-detection area. Specifically, the guide frame may be disposed so as to cover an entire region or a substantially entire region of the non-detection area, which is not covered by the housing. In a case where the substantially entire region is covered, it is preferable that an uncovered region of the non-detection area lies only in a region in proximity to the guide frame which cannot be contacted by a tip of the pen when the pen contacts the guide frame.

The input device further comprises a pen for operating the touch panel. In the guide frame of the input device, a position of a tip of the pen, which contacts the touch panel, may be limited so that the tip of the pen does not contact the non-detection area of the touch panel. Thus, it can be prevented that the pen enters the non-detection area, which a player does not intend, enhancing operability.

In the input device, when a side face of the pen is caused to contact the guide frame while the pen is caused to contact the touch panel, the tip of the pen may be positioned in the detection area of the touch panel. Thus, it can be prevented that a pen enters the non-detection area, which a player does not intend, enhancing operability and an entire region of the detection area of the touch panel can be effectively utilized. It is preferable that based on a pen provided for this input device, it is determined whether the tip of the pen is positioned in the detection area of the touch panel when the side face of the pen is caused to contact the guide frame while the pen is caused to contact the touch panel. For example, it is preferable that it is determined based on a pen which is included in a set of this input device to be sold or a pen to be sold as a pen which is to be used in this input device.

In a side view of the input device, a top of the guide frame may be lower than a top of a portion neighboring the guide frame in the housing. Thus, since even if a portion in proximity to an opening portion of the housing is pressed by a finger, the finger does not contact the guide frame, it does not occur that the guide frame is pressed.

In the housing, a gradient which slopes toward the opening portion of the housing in a gentle or step-like manner may be formed. Thus, it can be prevented that a finger slides on a surface of the housing and moves onto the guide frame and the touch panel.

The guide frame may be attached to the surface of the touch panel. Thus, since the guide frame can be fixed without being attached to the housing, a pressing force exerted when the housing is pressed is hardly transmitted to the guide frame, allowing prevention of occurrence of erroneous inputting which is caused by pressing the housing.

At least one operation switch may be provided on a surface same as a surface of the opening portion of the housing. Thus, it can be prevented that when a player tries to press any of operation switches, the player erroneously presses the housing and erroneous inputting occurs.

Another input device according to the prevent invention comprises a housing having an opening portion; a pressure-sensitive type touch panel which is disposed inside of the housing and exposed from the opening portion; and a guide frame which is a member independent from the housing. The touch panel has a detection area and a non-detection area which surrounds the detection area and is disposed so that an edge of the opening portion of the housing contacts or faces the non-detection area and a part of the non-detection area is exposed from the opening portion. The guide frame is disposed so as to cover the exposed portion of the non-detection area.

According to the present invention, even when the housing is strongly pressed, no influence reaches the detection area of the touch panel, allowing the erroneous inputting to be prevented. In addition, by providing the guide frame around the touch panel, a region where a player can touch with a pen or a finger can be limited to an appropriate range.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram illustrating an external view of a game device according to one embodiment of the present invention;
FIG. 2 is a diagram illustrating a perspective view of the game device;
FIG. 3 is a diagram illustrating an internal structure of the game device;
FIG. 4 is a diagram illustrating a cross-sectional view, along a line A-A, of the game device;
FIG. 5 is a diagram illustrating an enlarged cross-sectional view, along a line A-A, of a part of the game device;
FIG. 6 is a diagram illustrating a cross-sectional view, along a line B-B, of the game device;
FIG. 7 is a diagram illustrating an enlarged cross-sectional view, along a line B-B, of a part of the game device;
FIG. 8 is a diagram showing a positional relationship between a detection area of the touch panel and a guide frame;
FIG . 9 is a diagram illustrating an exemplary disposition of the guide frame;
FIG. 10 is a diagram illustrating another exemplary disposition of the guide frame;
FIG. 11 is a diagram illustrating further another exemplary disposition of the guide frame;
FIG. 12 is a diagram showing effect of making a thickness of the guide frame smaller than a thickness of a housing;
FIG. 13 is a diagram showing effect of forming a gradient portion in the housing;
FIG. 14 is a diagram illustrating one example of a conventional input device using a pressure-sensitive type touch panel; and
FIG. 15 is a diagram illustrating another example of a conventional input device using a pressure-sensitive type touch panel.

### DESCRIPTION OF THE PREFERRED EMBODIMENTS

A setting and a movement of a game device according to a first embodiment of the present invention will be described below.

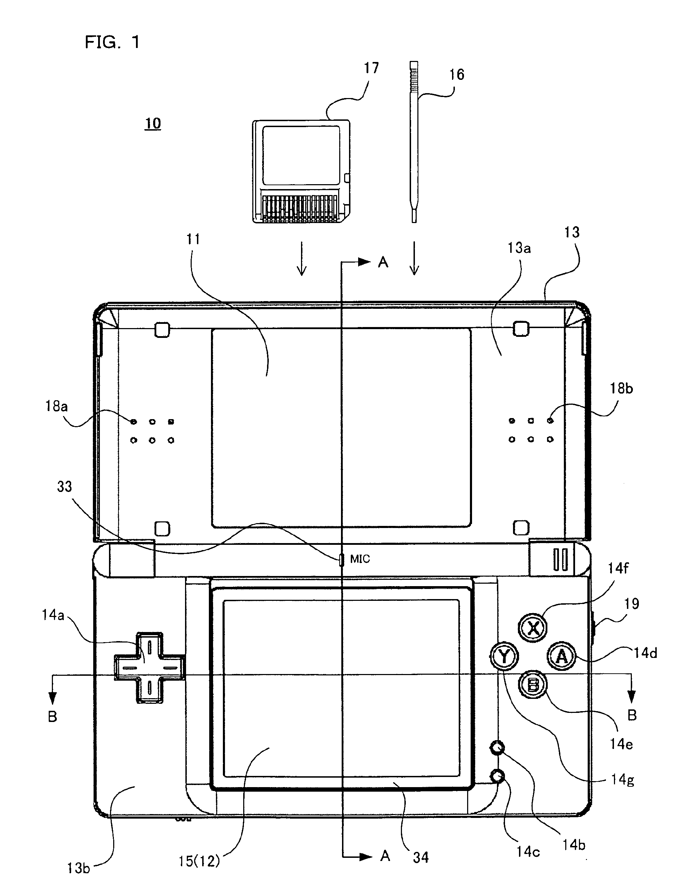

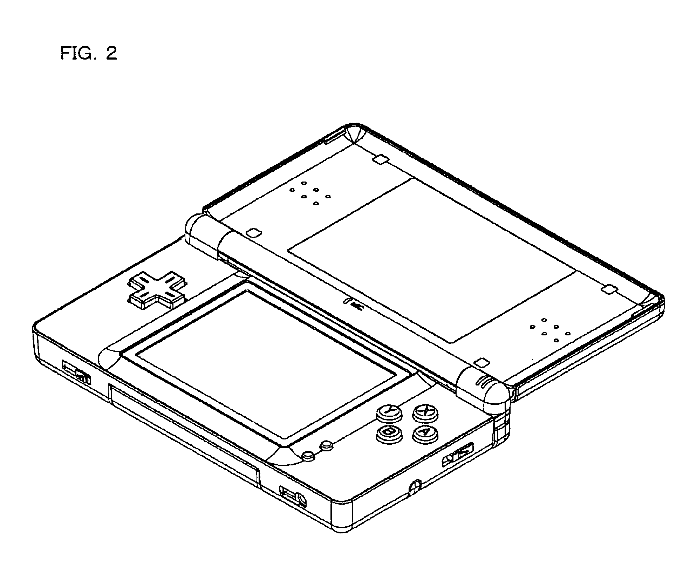

FIG. 1 is an external view of a game device 10 according to a first embodiment of the present invention. FIG. 2 is a diagram illustrating an oblique perspective view of the game device 10. In FIG. 1, the game device 10 includes a first LCD (Liquid Crystal Display) 11 and a second LCD 12. A housing 13 comprises an upper housing 13a and a lower housing 13b, and the first LCD 11 is accommodated in the upper housing 13a, and the second LCD 12 is accommodated in the lower housing 13b. Resolutions of the first LCD 11 and the second LCD 12 are both 256 dots x 192 dots. Note that though an LCD is used as a display device in the present embodiment, any other display devices such as a display device using an EL (Electro Luminescence) may be used. Also, the resolution of the display device may be at any level.

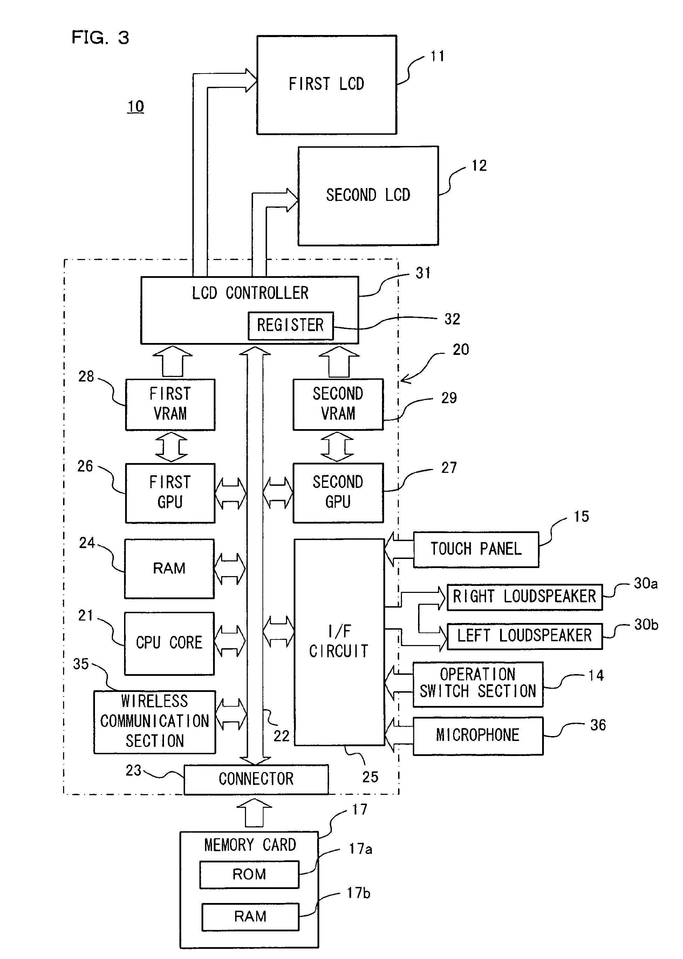

The upper housing 13a is provided with sound holes 18a and 18b for outputting a sound from a pair of loudspeakers (30a and 30b shown in FIG. 3) to an exterior. A description of the pair of loudspeakers will be provided later.

A hole 33 for a microphone is provided at a hinge portion which connects the upper and lower housings 13a and 13b in a pivotable manner.

The lower housing 13b is provided with input devices as follows; a cross switch 14a, a start switch 14b, a select switch 14c, an "A" button 14d, a "B" button 14e, an "X" button 14f, and a "Y" button 14g. In addition, a touch panel 15 is provided on a screen of the second LCD 12 as another input device. A guide frame 34 is attached to a surface of the touch panel 15. A function of the guide frame 34 will be described later in detail. The lower housing 13b further includes a power switch 19, and insertion openings for storing a memory card 17 and a stick 16.

The touch panel 15 is a resistive film type touch panel. However, in the present invention, the touch panel 15 is not limited to the resistive film type touch panel, but any pressure-sensitive type touch panel may be used. The touch panel 15 can be operated by not only the stick 16 but also a finger. A touch panel 15 used in the present embodiment has a same resolution at 256 dots x 192 dots (detection accuracy) as that of the second LCD 12. However, resolutions of the touch panel 15 and the second LCD 12 may not necessarily be consistent with each other.

The memory card 17 is a storage medium having a game program stored therein, and placed in the insertion slot provided at the lower housing 13b in a removable manner.

Next, an internal configuration of the game device 10 will be described with reference to FIG. 3.

In FIG. 3, a CPU core 21 is mounted on an electronic circuit board 20 which is to be housed in the housing 13. Via a bus 22, the CPU core 21 is connected to a connector 23, an input/output interface circuit (shown as I/F circuit in the diagram) 25, a first GPU (Graphics Processing Unit) 26, a second GPU 27, a RAM 24, a LCD controller 31 and a wireless communication section 35. The memory card 17 is connected to the connector 23 in a removable manner. The memory card 17 includes a ROM 17a for storing a game program and a RAM 17b for storing backup data in a rewritable manner. The game program stored in the ROM 17a of the memory card 17 is loaded to the RAM 24, and the game program having been loaded to the RAM 24 is executed by the CPU core 21. The RAM 24 stores, in addition to the game program, data such as temporary data which is obtained by the CPU core 21 executing the game program, and data for generating a game image. Connected to the I/F circuit 25 are a touch panel 15, a right loudspeaker 30a, a left loudspeaker 30b, and an operation switch section 14, which is comprised of a cross switch 14a, an "A" button 14d, and others, as shown in FIG. 1. The right loudspeaker 30a and the left loudspeaker 30b are arranged inside the sound holes 18a and 18b, respectively. The microphone 36 is arranged inside the hole 33 for the microphone.

A first VRAM (Video RAM) 28 is connected to the first GPU 26, and a second VRAM 29 is connected to the second GPU 27. In accordance with an instruction from the CPU core 21, the first GPU 26 generates a first game image based on data used for image generation which is stored in the RAM 24, and writes images into the first VRAM 28. The second GPU 27 also follows an instruction from the CPU core 21 to generate a second game image, and writes images into the second VRAM 29. The first VRAM 28 and the second VRAM 29 are connected to the LCD controller 31.

The LCD controller 31 includes a register 32. The register 32 stores a value of either 0 or 1 in accordance with an instruction from the CPU core 21. When the value of the register 32 is 0, the LCD controller 31 outputs to the first LCD 11 the first game image which has been written into the first VRAM 28, and outputs to the second LCD 12 the second game image which has been written into the second VRAM 29. When the value of the register 32 is 1, the first game image which has been written into_the first VRAM 28 is outputted to the LCD 12, and the second game image which has been written into the second VRAM 29 is outputted to the first LCD 11.

The wireless communication section 35 has a function of receiving and transmitting data, such as data used for a game process and other data, to and from a wireless communication section of other game device.

The present invention can be employed for not only a game device but also any device having a pressure-sensitive type touch panel supported by a housing. For example, the present invention can be adopted for a mobile game device, a controller in a stationary game device, and a PDA (Personal Digital Assistance). And the present invention can be applied for an input device in which a display is not provided below a touch panel.

FIG. 4 is a diagram illustrating a cross-sectional view, along a line A-A, of the game device shown in FIG. 1. FIG. 5 is a diagram illustrating an enlarged view of a part circled by a chain line shown in FIG. 4. As shown in FIG. 5, the touch panel 15 is mounted on a liquid crystal panel included in the second LCD 12 . These liquid crystal panel and touch panel 15 are supported by the housing 13. The housing 13 supports the touch panel 15 so as to contact side faces and a peripheral portion of the touch panel 15. Formed in the housing 13 is a gradient portion which gently slopes toward an opening portion (i.e., a portion on which a surface of the touch panel 15 is exposed) of the housing 13. A guide frame 34 is attached on a surface of the touch panel 15. The touch panel 15 and the guide frame 34 are attached by, for example, a two-sided tape.

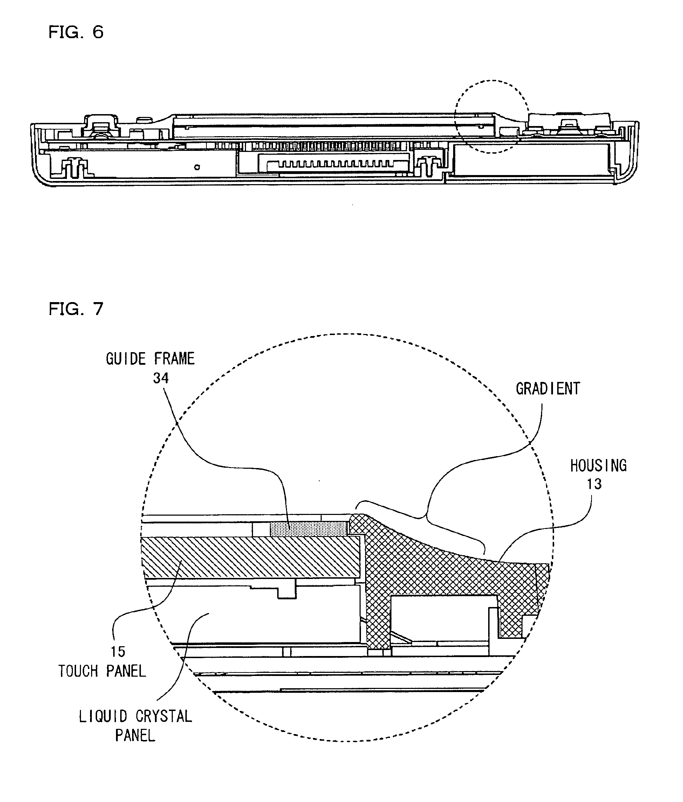

FIG. 6 is a diagram illustrating a cross-sectional view, along a line B-B, of the game device shown in FIG. 1. FIG. 7 is a diagram illustrating an enlarged view of a part circled by a chain line shown in FIG. 6. Also in the cross-sectional view along the line B-B, as similarly to the cross-sectional view along the line A-A, the housing 13 supports the touch panel 15 so as to contact side faces and a peripheral portion of the touch panel 15 and has a gradient formed, which gently slopes toward the opening portion of the housing 13, and the guide frame 34 is attached on the surface of the touch panel 15.

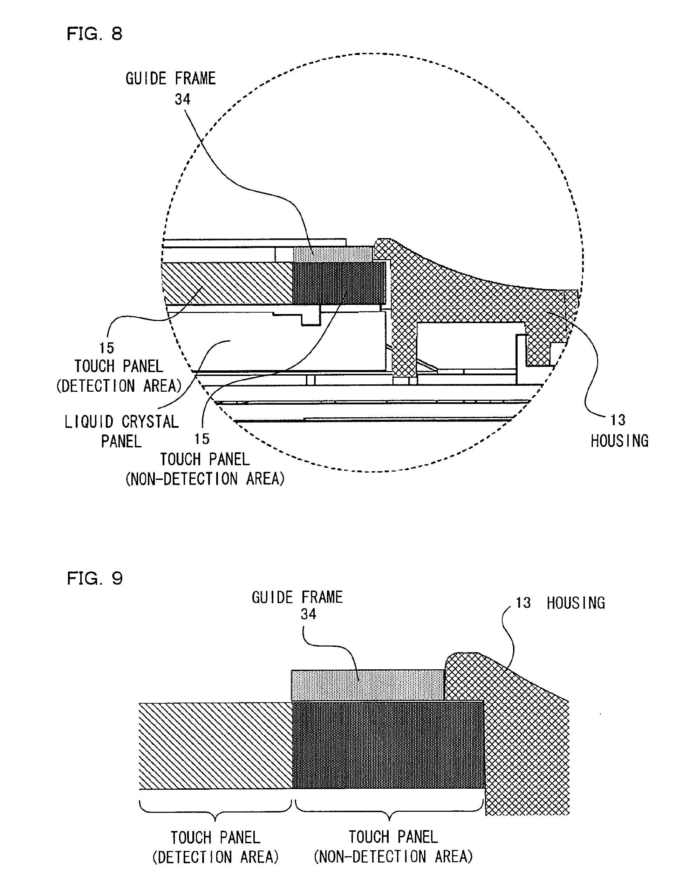

FIG. 8 is a diagram showing a positional relationship of a detection area and the guide frame 34 of the touch panel 15. FIG. 9 is a diagram illustrating an enlarged part of the detection area and the guide frame 34 of the touch panel 15. As shown in FIG. 9, the housing 13 supports the touch panel 15 so as to contact the touch panel 15 at a position which is away from the detection area on the surface of the touch panel 15, supporting the touch panel 15. The guide frame 34 covers a portion in a non-detection area of the touch panel 15, which is not covered by the housing 13. In such a structure, even if a player strongly presses on a surface of the housing 13, the pressing force is exerted on the peripheral portion of the touch panel 15, not influencing the detection area of the touch panel 15. Accordingly, even if the surface of the housing 13 is strongly pressed, no erroneous inputting will arise. Because the guide frame 34 is provided on the non-detection area of the touch panel 15, it will not occur that a player erroneously moves the stick 16 on the non-detection area while performing dragging operation.

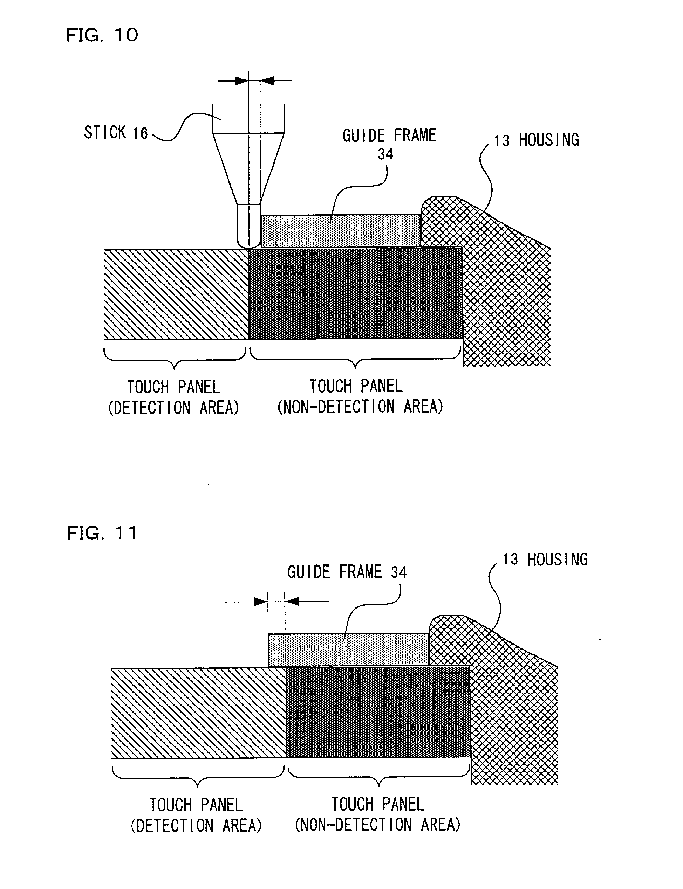

Although in FIG. 9, an example in which an edge portion of the guide frame 34 is located on a boundary of the detection area and the non-detection area of the touch panel 15 is shown, the present invention is not limited to this. For example, as shown in FIG. 10, when a side face of the stick 16 is caused to contact the guide frame 34 so that the stick 16 contacts the touch panel 15 in a perpendicular manner, the edge portion of the guide frame 34 is located so that a tip of the stick 16 is positioned on the boundary (more precisely, a portion on the detection area neighboring the boundary) of the detection area and the non-detection area of the touch panel 15. Thus, all the detection area of the touch panel 15 can be effectively utilized. And for example, as shown in FIG. 11, the boundary of the detection area and the non-detection area of the touch panel 15 may be covered by the guide frame 34. However, in a case where the boundary of the detection area and the non-detection area of the touch panel 15 is excessively in proximity to the housing 13, when a player strongly presses the surface of the housing 13, the influence reaches the detection area of the touch panel 15. Accordingly, it is required that the boundary of the detection area and the non-detection area of the touch panel 15 is sufficiently away from the point at which the housing 13 contacts the touch panel 15 (that is, to an extent which erroneous inputting will not arise even if a player strongly presses the surface of the housing 13).

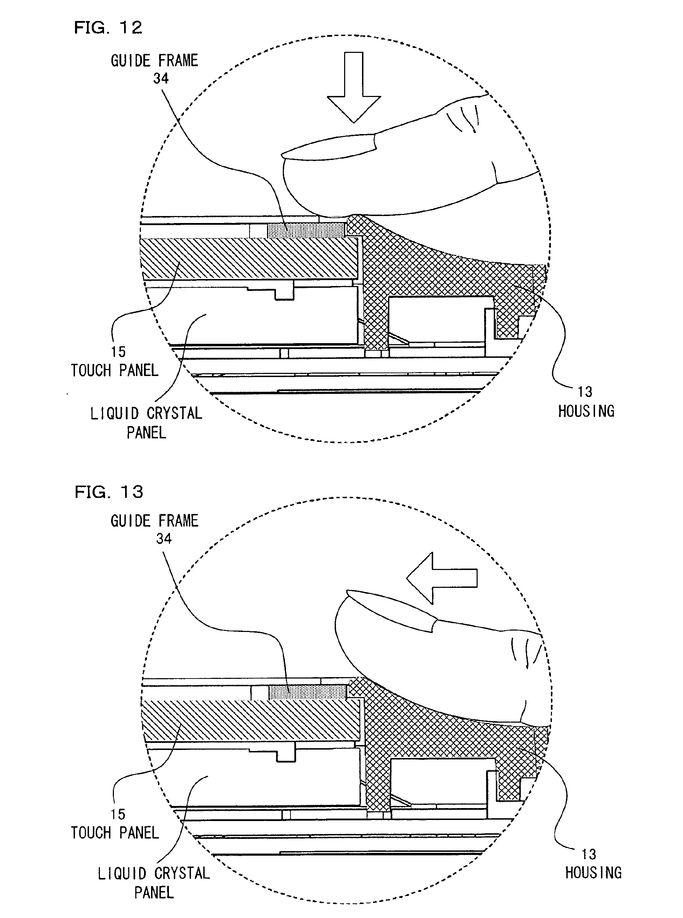

In the meantime, although even if a player strongly presses the surface of the housing 13, the influence does not reach the detection area of the touch panel 15, when a player presses the guide frame 34, it is likely that the influence may reach the detection area of the touch panel 15. In particular, as shown in FIG. 11, when the guide frame 34 contacts the touch panel 15, it is more likely that the influence may reach the detection area of the touch panel 15 (conversely, when the guide frame 34 does not contact the touch panel 15, it is less likely that the influence may reach the detection area of the touch panel 15) . In the present embodiment, however, by making a thickness of the guide frame 34 smaller than that of a region, which neighbors the guide frame 34, of the housing 13, a top of the guide frame 34, in the side view, becomes lower than a top of the region, which neighbors the guide frame 34, of the housing 13. As a result, as shown in FIG. 12, even if a player presses a periphery of a screen of the second LCD 12, a finger does not contact the guide frame 34, avoiding a situation that the guide frame 34 is pressed by a player. In particular, as shown in FIG. 1, in a case where operation switches are provided in proximity to the touch panel 15, there is a good possibility that when a player tries to press any of the operation switches, the player erroneously presses the periphery of the screen. Therefore, an advantage of employing the above-described structure is very great.

Because of the gradient portion formed in the housing 13 as shown in FIGs. 5 and 7, even if a finger of a player holding the housing 13 slides and moves on the surface of the housing 13, as shown in FIG. 13, it can be prevented that the finger moves on the guide frame 34 and the touch panel 15. In particular, for example, when a player holds a housing with his or her left hand and performs inputting by using a pen with his or her right hand while holding an input device with his or her one hand, a thumb of the hand holding the housing easily moves toward an upper portion of the screen unconsciously. Therefore, an advantage of employing the above-described structure is very great.

As described above, according to the present embodiment, occurrence of the erroneous inputting which is caused by pressing the housing can be prevented

Although in the present embodiment, an example in which the thickness of the guide frame 34 is smaller than that of the region, which neighbors the guide frame 34, of the housing 13 is described, the present invention is not limited to this and the thickness of the guide frame 34 may be same as or greater than that of the region, which neighbors the guide frame 34, of the housing 13.

Although in the present embodiment, an example in which the gradient portion which gently slopes toward the opening portion of the housing is formed is described, the present invention is not limited to this and a gradient portion which slopes toward the opening portion of the housing in a step-like manner may be formed.

Although in the present embodiment, an example in which the periphery of the housing 13 contacts the non-detection area of the touch panel 15 is described, the present invention is not limited to this and the periphery of the housing 13 may float above the non-detection area of the touch panel 15. In other words, the periphery of the housing 13 may face, having a gap, the non-detection area of the touch panel 15. Also in this case, because the gap is covered by the guide frame 34, it never occurs that a foreign substance such as sand enters the gap.

While the invention has been described in detail, the foregoing description is in all aspects illustrative and not restrictive. It is understood that numerous other modifications and variations can be devised without departing from the scope of the invention.

## Claims

1. An input device, comprising:
a pressure-sensitive type touch panel (15);
a housing (13) for supporting the touch panel so as to contact the touch panel at a position which is away from a detection area on a surface of the touch panel; and
a guide frame (34) which is disposed on the surface of the touch panel so as to be attached on a periphery of an opening portion of the housing and is a member independent from the housing.

2. The input device according to claim 1, wherein the guide frame covers at least one part of a portion, which is not covered by the housing, of a non-detection area of the touch panel.

3. The input device according to claim 1, further comprising a pen (16) for operating the touch panel, wherein
in the guide frame, a position of a tip of the pen, which contacts the touch panel, is limited so that the tip of the pen does not contact the non-detection area of the touch panel.

4. The input device according to claim 3, wherein when a side face of the pen is caused to contact the guide frame while the pen is caused to contact the touch panel in a perpendicular manner, the tip of the pen is positioned in a detection area of the touch panel.

5. The input device according to claim 1, wherein in a side view, a top of the guide frame is lower than a top of a portion neighboring the guide frame in the housing.

6. The input device according to claim 1, wherein in the housing, a gradient which slopes toward an opening portion of the housing in a gentle or step-like manner is formed.

7. The input device according to claim 1, wherein the guide frame is attached to the surface of the touch panel.

8. The input device according to claim 1, wherein at least one operation switch is provided on a surface where the opening portion of the housing is disposed.

9. A mobile game device comprising the input device according to claim 1.

10. A controller for a game device comprising the input device according to claim 1.

11. An input device comprising a housing (13) having an opening portion and a pressure-sensitive type touch panel (15) which is disposed inside of the housing and exposed from the opening portion, wherein
the touch panel has a detection area and a non-detection area surrounding the detection area and is disposed so that an edge of the opening portion of the housing contacts or faces the non-detection area and a part of the non-detection area is exposed from the opening portion, the input device comprising
a guide frame (34) which is disposed so as to cover the exposed portion of the non-detection area and is a member independent from the housing.
